# EUROPÄISCHE PATENTSCHRIFT

(11) **EP 1 331 150 B1**
(45) Veröffentlichungstag und Bekanntmachung des Hinweises auf die Patenterteilung: **22.03.2006**
(21) Anmeldenummer: 02028228.1
(22) Anmeldetag: 16.12.2002
(51) Int. Cl.: B60T 7/04

(54) **Verbundbauteil mit ebenem und gekröpftem Grundkörper**
Composite part with plane and elbowed main body
Partie composite avec d'un corp de base plan et coudeé

(30) Priorität: 18.01.2002 DE 10202043
(43) Veröffentlichungstag der Anmeldung: 30.07.2003
(73) Patentinhaber: BASF Aktiengesellschaft, 67056 Ludwigshafen (DE)
(72) Erfinder: Endemann, Ulrich, Dr., 67278 Bockenheim (DE); Glaser, Stefan, Dr., 67105 Schifferstadt (DE); Völker, Martin, 67549 Worms (DE)

(56) Entgegenhaltungen:
- EP-A- 0 430 600
- EP-A- 1 043 647
- EP-B- 0 370 342
- DE-A- 3 427 097
- DE-U- 7 536 061
- DE-U- 8 614 205

## Beschreibung

Die Erfindung betrifft ein Verbundbauteil aus einem flächig ausgebildeten Grundkörper, der auf beiden Außenflächen Verstärkungsrippen aufweist, welche aus angespritztem Kunststoff bestehen und mit dem Grundkörper fest verbunden sind, wobei der Grundkörper im wesentlichen eben und einfach oder mehrfach gekröpft ist. Ferner betrifft die Erfindung Verfahren zur Herstellung eines Verbundbauteils und Verwendungen eines Verbundbauteils. Weiterhin betrifft die Erfindung Hebel, umfassend ein Verbundbauteil, und ein Bremspedal, umfassend ein Verbundbauteil.

Bauteile, die allein aus einem Material bestehen, können oftmals nicht allen Anforderungen an das Bauteil gerecht werden. So haben beispielsweise Bauteile, die ausschließlich aus Metall bestehen, verglichen mit Kunststoffbauteilen ein relativ hohes Gewicht. Dies ist beispielsweise im Kraftfahrzeug nachteilig, da durch schwere Bauteile der Kraftstoffverbrauch nachteilig beeinflußt wird. Bauteile, die alleine aus Kunststoff bestehen, haben verglichen mit gleichartigen Bauteilen aus metallischem Werkstoff bei vertretbarer Dimensionierung der Querschnitte im allgemeinen geringere Festigkeiten und Steifigkeiten und weisen oftmals Nachteile in der Energieaufnahme bei schlagartiger Beanspruchung auf. Verbundbauteile, beispielsweise umfassend Metallgrundkörper und damit verbundene Kunststoffelemente, die diese Nachteile nicht aufweisen, sind bekannt und werden beispielsweise für den Automobil- bzw. Fahrzeugbau verwendet. Der Grundkörper und die Kunststoffelemente versteifen und verstärken sich gegenseitig. Ferner dienen die Kunststoffelemente darüber hinaus zur Funktionsintegration im Sinne einer System- bzw. Modulbildung.

NächstliegenderStand der Technik: EPA0430600 offenbart ein Bremspedal-Verbundbauteil aus einem flächig ausgebildeten Grundkörper aus metallischen Werkstoffen, der auf beiden Außenflächen Verstärkungsrippen aufweist, welche aus angespritztem Kunststoff bestehen und mit dem Grundkörper fest verbunden sind. Der Grundkörper ist auch im wesentlichen eben gekröpft.

Aus EP 0 370 342 B1 sind Leichtbauteile bekannt, welche aus einem schalenförmigen Grundkörper bestehen, dessen Innenraum Verstärkungsrippen aufweist, welche mit dem Grundkörper fest verbunden sind. In idealer Weise besteht der Grundkörper aus Metall und die Verstärkungsrippen aus angespritztem, thermoplastischem Kunststoff. Die Verstärkungsrippen sind an diskreten Stellen über Durchbrüche im Grundkörper, durch welche der Kunststoff beim Spritzgießen hindurchfließt, fest mit diesem verbunden. Nachteilig an diesen Leichtbauteilen ist, daß die schalenförmigen Grundkörper nur durch vergleichsweise aufwendige und damit teure Formgebungsprozesse, wie beispielsweise dem Tiefziehen von Metallblechen, erhältlich sind.

Auf dem 10. Aachener Kolloquium "Fahrzeug und Motorentechnikn, welches vom 08. bis 10. Oktober 2001 im Eurogress in Aachen, Deutschland, stattfand, wurde am 09. Oktober 2001 von Dipl.-Ing. R. Zimnol, Bayer AG, Leverkusen, in einem Vortrag ein Bremspedal offenbart, welches einen gelochten Grundkörper mit annähernd z-förmigen Querschnitt und mit diesem Grundkörper fest verbundene Verstärkungsrippen umfaßt (siehe Script zum Kolloquium, Herausgeber VKA Lehrstuhl für Verbrennungskraftmaschinen Aachen, ika Institut für Kraftfahrwesen Aachen, RWTH Rheinisch Westfälische Technische Hochschule Aachen und VDI Verein Deutscher Ingenieure, VDI-Gesellschaft Fahrzeug- und Verkehrstechnik, Seite 556). Das offenbarte Bremspedal soll im Fall eines Unfalls höchstens verbogen werden, nicht jedoch brechen. Der annähernd z-förmige Grundkörper ist ebenfalls nur durch vergleichsweise aufwendige und damit teure Formgebungsprozesse erhältlich. Das annähernde Z-Profil des Grundkörpers ist mit verantwortlich für die Erreichung der nötigen Festigkeit und Steifigkeit des Bremspedals.

Daher war es die Aufgabe der vorliegenden Erfindung, Verbundbauteile, insbesondere Hebel und Bremspedale, zur Verfügung zu stellen, die gegenüber bekannten Verbundbauteilen bei vergleichbarem oder niedrigerem Gewicht und vergleichbaren Festigkeiten, Steifigkeiten und Energieaufnahmen auf einfachere und billigere Weise herstellbar sind.

Diese Aufgabe wird von den eingangs definierten Verbundbauteilen, die im folgenden näher beschrieben sind, erfüllt.

Die erfindungsgemäßen Verbundbauteile umfassen einen flächig ausgebildeten Grundkörper, der auf beiden Außenflächen Verstärkungsrippen aufweist, welche aus angespritztem Kunststoff bestehen und mit dem Grundkörper fest verbunden sind. Der Grundkörper ist im wesentlichen eben und einfach oder mehrfach gekröpft.

Unter flächig ausgebildeten Grundkörpern im Sinne der vorliegenden Erfindung sind solche Grundkörper zu verstehen, die bezogen auf drei jeweils senkrecht zueinander stehende Raumachsen eine geringere maximale räumliche Ausdehnung entlang einer Raumachse (beispielsweise der Höhe) aufweisen als unabhängig voneinander entlang jeder der beiden anderen Raumachsen (beispielsweise Länge und Breite) . In der Regel liegt das Verhältnis der maximalen räumlichen Ausdehnung entlang einer Raumachse zu den maximalen räumlichen Ausdehnungen entlang jeder der beiden anderen Raumachsen unabhängig voneinander im Bereich von 0,001 bis 0,5, bevorzugt von 0,002 bis 0,3, besonders bevorzugt von 0,01 bis 0,1. Beispielsweise kann der Grundkörper eine maximale Ausdehnung in der Länge von 10 cm, eine maximale Ausdehnung in der Breite von 2 cm und eine maximale Ausdehnung in der Höhe von 2 mm aufweisen.

Der Grundkörper der erfindungsgemäßen Verbund.bauteile ist im wesentlichen eben und einfach oder mehrfach gekröpft. Im Sinne der Erfindung bedeutet dies, daß der Grundkörper keine Wölbung, Biegung, Faltung oder ähnliche Verformungen (abgesehen von gegebenenfalls vorhandenen diskreten Sicken, Ausbuchtungen oder ähnlichen Verformungen wie sie im folgenden beschrieben werden) in Richtung der Raumachse mit der geringsten maximalen räumlichen Ausdehnung des Grundkörpers aufweist, die zur Festigkeit oder Steifigkeit des erfindungsgemäßen Verbundbauteils einen wesentlichen Beitrag leisten, sondern lediglich einfache oder mehrfache Kröpfungen aufweist, die aufgrund räumlicher Anforderungen an das Verbundbauteil nötig sind.

Ansonsten ist die räumliche Form der Grundkörper keiner prinzipiellen Beschränkung unterworfen.

Der Grundkörper besteht vorzugsweise aus metallischen Werkstoffen. Geeignete Materialien sind beispielsweise Stähle, Aluminium, Magnesium oder Aluminium- oder Magnesiumlegierungen. Die Grundkörper sind nach bekannten Verfahren auf einfache und kostengünstige Weise herstellbar, beispielsweise, durch Ausstanzen oder Ausschneiden der Grundkörper aus unbehandelten, verzinkten, lakkierten und/oder mit einem Primer und gegebenenfalls einem Haftvermittler versehenen Stahlblechen oder unbehandelten, eloxierten und/oder mit einem Primer und gegebenenfalls einem Haftvermittler versehenen Aluminiumblechen, wobei bevorzugt im gleichen Arbeitsschritt beispielsweise dem Ausstanzen oder Ausschneiden, der Grundkörper gekröpft wird. Das Kröpfen des Grundkörpers kann auch nachträglich erfolgen. Maßgeblich ist, daß der Grundkörper keinem weiteren Verformungsprozeß unterworfen werden muß.

Der Grundkörper weist auf seinen beiden Außenseiten, das heißt, auf den Seiten des Grundkörpers, die senkrecht zu der Raumachse stehen, in deren Richtung der Grundkörper die geringste räumliche Ausdehnung aufweist, Verstärkungsrippen auf, welche aus angespritztem Kunststoff bestehen und mit dem Grundkörper fest verbunden sind.

In erfindungswesentlicher Ausführung erfolgt die feste Verbindung zwischen dem Grundkörper und den Verstärkungsrippen über einen oder mehrere Durchbrüche im Grundkörper, durch welche die Verstärkungsrippen auf der einen Außenseite des Grundkörpers mit den Verstärkungsrippen auf der anderen Seite des Grundkörpers durch mindestens eine Verbindung aus dem zur Ausbildung der Verstärkungsrippen angespritzten Kunststoff verbunden sind. Bevorzugt erfolgt die Verbindung aus dem zur Ausbildung der Verstärkungsrippen angespritzten Kunststoff über alle Durchbrüche im Grundkörper. Der Grundkörper kann einen oder mehrere, beispielsweise bis zu 20, Durchbrüche aufweisen, wobei der Anteil der durchbrochenen Außenfläche des Grundkörpers bezogen auf die gesamte Au-ßenfläche des Grundkörpers in der Regel von 1 bis 95 Flächen-%, bevorzugt von 5 bis 90 Flächen-%, besonders bevorzugt von 10 bis 80 Flächen-% beträgt. Die Durchbrüche können eine runde, mehrekkige, beispielsweise drei-, vier-, fünf-, oder sechseckige, oder eine andere regelmäßige oder unregelmäßige Form aufweisen. Die Durchbrüche können den Grundkörper prinzipiell in einem beliebigen Winkel durchbrechen, bevorzugt durchbrechen sie den Grundkörper in senkrechter Richtung bezogen auf die Außenflächen des Grundkörpers. Vorteilhafterweise befinden sich die Durchbrüche an den Stellen des Grundkörpers, die bei der Verwendung des Verbundbauteils den geringsten mechanischen Belastungen, beispielsweise Zug- oder Torsionskräften, ausgesetzt sind.

In einer erfindungsgemäßen Ausführungsform sind die Durchbrüche im Grundkörper von der Verbindung aus dem zur Ausbildung der Verstärkungsrippen angespritztem Kunststoff vollständig ausgefüllt. Diese Ausführungsform ist insbesondere dann günstig, wenn mehrere und/oder in Bezug zur Außenfläche relativ kleine Durchbrüche im Grundkörper vorliegen.

In einer weiteren erfindungsgemäßen Ausführungsform sind die Durchbrüche im Grundkörper von der Verbindung aus dem zur Ausbildung der Verstärkungsrippen angespritztem Kunststoff nur teilweise ausgefüllt. Diese Ausführungsform ist insbesondere dann günstig, wenn nur wenige Durchbrüche, insbesondere nur ein Durchbruch, und/oder in Bezug zur Außenfläche relativ große Durchbrüche im Grundkörper vorliegen.

Bevorzugt erfolgt die Verbindung der Verstärkungsrippen, die der Grundkörper auf seinen beiden Außenflächen aufweist, aus dem zur Ausbildung der Verstärkungsrippen angespritztem Kunststoff an den Kreuzungspunkten der jeweils auf einer Außenseite befindlichen Verstärkungsrippen. Diese Ausführungsform ist insbesondere dann günstig, wenn mehrere und/oder in Bezug zur Außenfläche relativ kleine Durchbrüche im Grundkörper vorliegen.

In einer weiteren bevorzugten Ausführungsform erfolgt die Verbindung der Verstärkungsrippen, die der Grundkörper auf seinen beiden Außenflächen aufweist, aus dem zur Ausbildung der Verstärkungsrippen angespritzten Kunststoff entlang der Verstärkungsrippen der jeweils auf einer Außenseite befindlichen Verstärkungsrippen. Diese Ausführungsform ist insbesondere dann günstig, wenn nur wenige Durchbrüche, insbesondere nur ein Durchbruch, und/oder in Bezug zur Außenfläche relativ große Durchbrüche im Grundkörper vorliegen.

In einer weiteren Ausführung der Erfindung erfolgt die feste Verbindung zwischen dem Grundkörper und den Verstärkungsrippen durch eine Ummantelung mindestens eines Teils oder bevorzugt der gesamten äußeren Randfläche des Grundkörpers mit dem zur Ausbildung der Verstärkungsrippen angespritzten Kunststoff. In dieser Ausführungsform der Erfindung ist es vorteilhaft, wenn die äußere Randfläche des Grundkörpers Aussparungen aufweist, die einen Formschluß mit dem angespritzten Kunststoff bilden. Diese Aussparungen können rund, länglich, eckig oder unregelmäßig geformt sein.

In einer bevorzugten Ausführungsform der Erfindung erfolgt die feste Verbindung zwischen dem Grundkörper und den Verstärkungsrippen sowohl über einen oder mehrere Durchbrüche im Grundkörper, durch welche die Verstärkungsrippen auf der einen Außenseite des Grundkörpers mit den Verstärkungsrippen auf der anderen Seite des Grundkörpers durch eine oder mehrere Verbindungen aus dem zur Ausbildung der Verstärkungsrippen angespritzten Kunststoff verbunden sind, als auch durch eine Ummantelung mindestens eines Teils oder bevorzugt der gesamten äußeren Randfläche des Grundkörpers mit dem zur Ausbildung der Verstärkungsrippen angespritzten Kunststoff.

In einer weiteren Ausführungsform der Erfindung kann neben den bereits beschriebenen Ausführungen der festen Verbindungen zwischen dem Grundkörper und den Verstärkungsrippen auch eine Ummantelung mindestens eines Teils oder der gesamten Außenflächen des Grundkörpers mit dem zur Ausbildung der Verstärkungsrippen angespritzten Kunststoff erfolgen. In diesem Fall können die mit einer solchen Ummantelung versehenen Außenflächen des Grundkörpers vorteilhafterweise diskrete Sicken, Ausbuchtungen oder ähnliche Verformungen aufweisen, die einen Formschluß mit dem angespritzten Kunststoff bilden.

Als Materialien zum Anspritzen der beschriebenen Verstärkungsrippen, Verbindungen und Ummantelungen eignen sich dem Fachmann bekannte Kunststoffe, insbesondere thermoplastische, teilkristalline oder amorphe Kunststoffe wie beispielsweise ungefülltes oder faserverstärktes und/oder mineralgefülltes Polyamid-6 und Polyamid-6.6, Polyethylen- und Polybutylenterephthalat, Polyoxymethylen, Polysulfon oder Polyethersulfon, ferner Polyphenylensulfid, Polypropylen oder Acrylnitril-Butadien-Styrol.

Die Herstellung der erfindungsgemäßen Verbundbauteile kann bei-spielsweise dadurch erfolgen, daß zuerst nach dem Fachmann bekannten Methoden der Grundkörper aus einem flächigen ebenen Werkstoff hergestellt, beispielsweise ausgestanzt oder ausgeschnitten, und direkt nachfolgend oder bevorzugt im gleichen Arbeitsschritt einfach oder mehrfach gekröpft wird, und anschließend nach dem Fachmann bekannten Methoden das Anspritzen des Kunststoffs erfolgt, beispielsweise, indem man den Grundkörper in ein Spritzgießwerkzeug mit entsprechend gestaltetem Formhohlraum einlegt und die Verstärkungsrippen sowie gegebenenfalls die anderen Kunststoff teile anspritzt. Wesentlich ist, daß der Grundkörper vor dem Anspritzen des Kunststoffs mit Ausnahme des gegebenenfalls durchgeführten Kröpfens keinem zusätzlichen Verformungsprozeß unterworfen werden muß.

Besonders geeignete Anwendungen finden die erfindungsgemäßen Verbundbauteile in Bauteilen, die neben niedrigem Gewicht auch gute Festigkeiten, Steifigkeiten und Energieaufnahmen aufweisen sollen. Beispielsweise sind die erfindungsgemäßen Verbundbauteile vorteilhafterweise als Hebel oder als Bremspedale für Kraftfahrzeuge verwendbar.

In einer bevorzugten Ausführungsform werden die erfindungsgemäßen Verbundbauteile als Bremspedale für Kraftfahrzeuge eingesetzt. In dieser speziellen Ausführungsform weist der Grundkörper neben den bereits beschriebenen Durchbrüchen im allgemeinen einen Durchbruch zur Aufnahme einer Halterungsvorrichtung für das Bremspedal und gegebenenfalls einen Durchbruch zur Aufnahme einer Verbindungsvorrichtung mit einem Bremszylinder auf. Weiterhin kann der zur Ausbildung der Verstärkungsrippen angespritzte Kunststoff eine Trittplatte ausbilden. Besonders bevorzugt wird die dem Fuß zugewandte Oberfläche der Trittplatte ganz oder teilweise von einem thermoplastischen Kunststoff, beispielsweise einem thermoplastischen Elastomer, ausgebildet, welcher sich von dem zur Ausbildung der Verstärkungsrippen angespritzten Kunststoff durch eine verbesserte Rutschfestigkeit unterscheidet. Die zum Anspritzen unterschiedlicher Kunststoffe zu einem einzigen Bauteil geeigneten Verfahren sind dem Fachmann bekannt.

Die erfindungsgemäßen Verbundbauteile, insbesondere Hebel und Bremspedale, haben gegenüber bekannten Verbundbauteilen ein vergleichbares oder niedrigeres Gewicht und vergleichbare Festigkeiten, Steifigkeiten und Energieaufnahmen, sind jedoch auf einfachere und billigere Weise herstellbar.

Anhand der Zeichnung wird die Erfindung nachstehend näher erläutert.

Es zeigen:
- Figur 1: Ein Bremspedal, bei dem ein flächig ausgebildeter, im wesentlichen ebener und zweifach gekröpfter Grundkörper mit auf seinen beiden Außenseiten befindlichen Verstärkungsrippen aus angespritztem Kunststoff über mehrere Durchbrüche im Grundkörper sowie durch eine Ummantelung der gesamten äußeren Randfläche und eine Ummantelung eines Teils der Außenflächen fest verbunden ist. Die Blickrichtung ist senkrecht zu den Außenflächen des Grundkörpers.
- Figur 1A: Das Bremspedal aus Figur 1 mit Blickrichtung senkrecht zum in Figur 1 dargestellten Schnitt entlang A-A.
- Figur 2: Das Bremspedal aus Figur 1 mit Blickrichtung senkrecht zu der Randfläche des Grundkörpers.
- Figur 3: Flächig ausgebildeter, im wesentlichen ebener und gekröpfter Grundkörper mit Durchbrüchen zur Herstellung eines Verbundbauteils, welches als Bremspedal verwendbar ist. Die Blickrichtung ist senkrecht zu den Außenflächen des Grundkörpers.
- Figur 4: Flächig ausgebildeter, im wesentlichen ebener, einfach gekröpfter Grundkörper mit Durchbrüchen zur Herstellung eines Verbundbauteils, welches als Bremspedal verwendbar ist. Die Blickrichtung ist senkrecht zu der Randfläche des Grundkörpers.
- Figur 5: Flächig ausgebildeter, im wesentlichen ebener, zweifach gekröpfter Grundkörper mit Durchbrüchen zur Herstellung eines Verbundbauteils, welches als Bremspedal verwendbar ist. Die Blickrichtung ist senkrecht zu der Randfläche des Grundkörpers.
- Figur 6: Flächig ausgebildeter, im wesentlichen ebener, gekröpfter Grundkörper mit Durchbrüchen zur Herstellung eines Verbundbauteils, welches als Bremspedal verwendbar ist. Die Blickrichtung ist senkrecht zu der Randfläche des Grundkörpers.

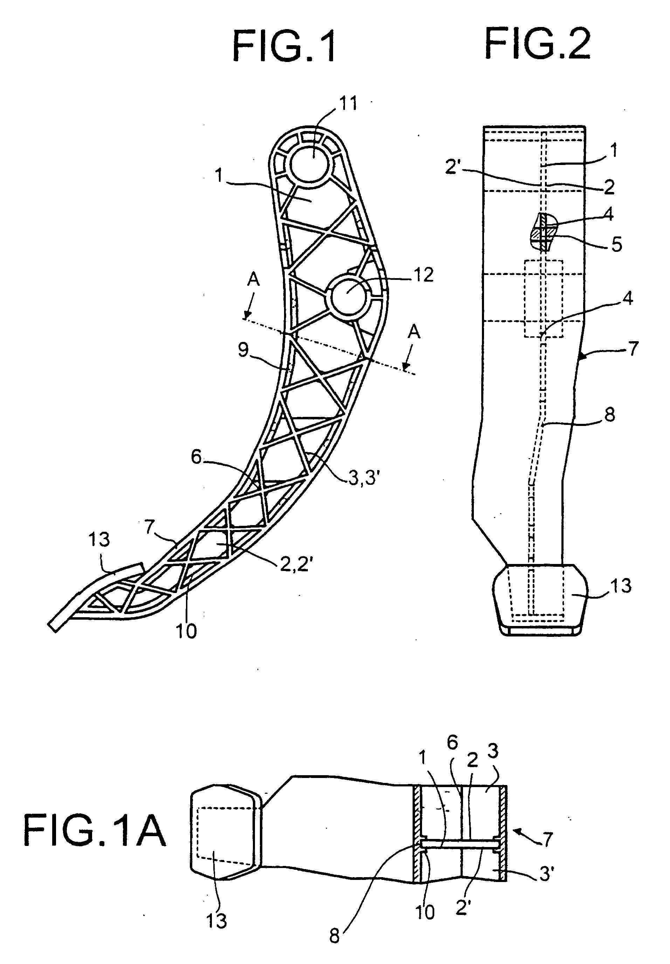

Figur 1 zeigt ein Bremspedal. Der flächig ausgebildete, im wesentlichen ebene und zweifach gekröpfte Grundkörper (1) besteht aus einem Stahl. Der Grundkörper hat eine maximale räumliche Ausdehnung in der Länge von 24 cm, in der Breite von 14 cm und in der Höhe von 6 mm. Der Grundkörper weist mehrere Durchbrüche (4) auf, die in Figur 1 nicht sichtbar sind, da sie von den Kreuzungspunkten (6) der Verstärkungsrippen (3) verdeckt werden. Der Grundkörper (1) besitzt an seiner äußeren Randfläche (8) Aussparungen (9), die einen Formschluß mit dem angespritzten Kunststoff bilden (die Aussparungen (9) sind in Figur 1 gestrichelt gezeichnet, da sie von der Ummantelung (10) verdeckt und somit nicht sichtbar sind). Der Grundkörper weist weiterhin einen Durchbruch (11) zur Aufnahme einer Halterungsvorrichtung für das Bremspedal und einen Durchbruch (12) zur Aufnahme einer Verbindungsvorrichtung für einen Bremszylinder auf. Der Grundkörper (1) wurde durch einfaches Ausstanzen mit gleichzeitigem Kröpfen aus einem Stahlblech hergestellt. Ohne daß ein zusätzlicher Verformungsprozeß am Grundkörper (1) durchgeführt wurde, wurde Polyamid-6 an den Grundkörper (1) angespritzt. Der angespritzte Kunststoff bildet an beiden Außenflächen (2, 2') des Grundkörpers (1) Verstärkungsrippen (3, 3') aus, die mit dem Grundkörper (1) fest verbunden sind. Über die Durchbrüche (4) werden die Verstärkungsrippen (3) mit den Verstärkungsrippen (3') durch jeweils eine Verbindung (5) aus dem angespritzten Kunststoff verbunden (die Verbindungen (5) sind in Figur 1 nicht sichtbar, da sie von den Kreuzungspunkten (6) verdeckt werden). Die Durchbrüche (4) sind von den Verbindungen (5) vollständig ausgefüllt. Die Verbindung (5) der Verstärkungsrippen (3) mit den Verstärkungsrippen (3') erfolgt an den Kreuzungspunkten (6) der jeweiligen Verstärkungsrippen (3) oder (3'). Der Grundkörper (1) ist mit den Verstärkungsrippen (3, 3') weiterhin durch eine Ummantelung (7) der gesamten äußeren Randfläche (8) des Grundkörpers (1) mit angespritztem Kunststoff verbunden (Randfläche (8) ist in Figur 1 nicht sichtbar). Außerdem ist der Grundkörper (1) mit den Verstärkungsrippen (3, 3') durch eine Ummantelung (10) eines Teils der Außenflächen (2,2') des Grundkörpers (1) mit dem zur Ausbildung der Verstärkungsrippen (3, 3') angespritzten Kunststoff fest verbunden. Der zur Ausbildung der Verstärkungsrippen (3, 3') angespritzte Kunststoff bildet eine Trittplatte (13) aus.

Figur 1A zeigt das Bremspedal aus Figur 1, mit Blickrichtung senkrecht zum in Figur 1 dargestellten Schnitt entlang A-A. Neben den in Figur 1 dargestellten Merkmalen ist die äußere Randfläche (8) des Grundkörpers (1) erkennbar.

Figur 2 zeigt das Bremspedal aus Figur 1 mit Blickrichtung senkrecht zu der Randfläche (8) des Grundkörpers (1). Einige nicht sichtbare Merkmale wurden gestrichelt dargestellt (Grundkörper (1), Außenflächen (2, 2'), Durchbrüche (4), Randfläche (8)). Ein Durchbruch (4) mit der den Durchbruch (4) ausfüllenden Verbindung (5) wurde der Übersichtlichkeit halber grafisch hervorgehoben. Einige der in Figuren 1 und 1A dargestellten Merkmale, beispielsweise die Verstärkungsrippen (3, 3') oder die Ummantelung (10), sind nicht sichtbar und wurden der Übersichtlichkeit halber nicht dargestellt. Neben den in Figuren 1 und 1A bereits dargestellten Merkmalen sind die Durchbrüche (4) sowie die die Durchbrüche (4) vollständig ausfüllenden Verbindungen (5) erkennbar, ebenso die zweifache Kröpfung des Grundkörpers.

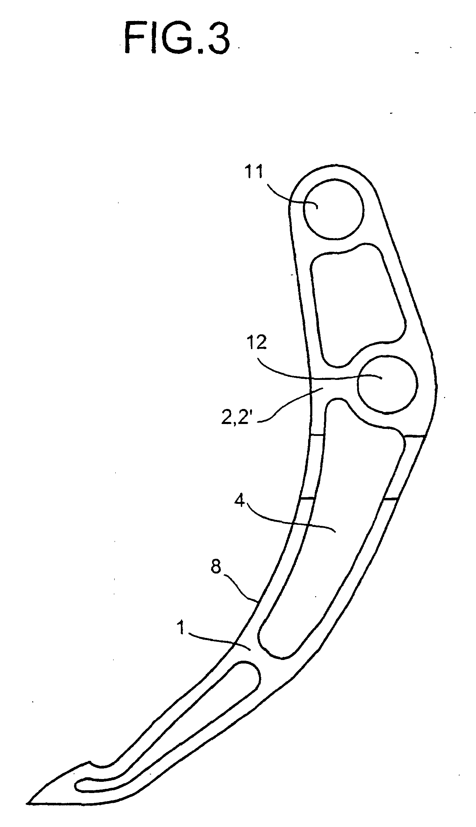

Figur 3 zeigt eine alternative Ausführungsform eines flächig ausgebildeten, im wesentlichen ebenen und gekröpften Grundkörpers (1) mit Durchbrüchen (4) zur Herstellung eines Verbtindbauteils, welches als Bremspedal verwendbar ist (Blickrichtung senkrecht zu den Außenflächen des Grundkörpers) . Zum Unterschied des in Figuren 1, 1A und 2 wiedergegebenen Grundkörpers (1) weist der in Figur 3 wiedergegebene Grundkörper (1) weniger Durchbrüche (4) auf, die aber einen größeren Anteil der Außenflächen (2, 2') des Grundkörpers (1) durchbrechen.

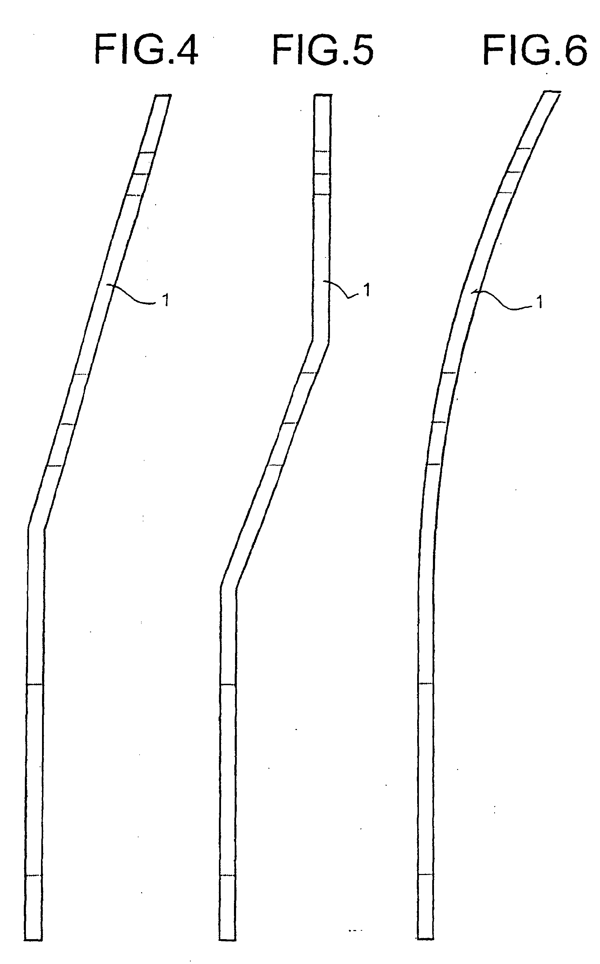

Die Figuren 4, 5 und 6 zeigen verschiedene Ausführungsformen von flächig ausgebildeten, im wesentlichen ebenen Grundkörpern (1), die jeweils unterschiedlich gekröpft sind.

Die in den Zeichnungen wiedergegebenen Verbundbauteile sind auf einfachere und billigere Weise herstellbar als die aus dem Stand der Technik bekannten Verbundbauteile mit schalenförmigem oder annähernd z-förmigen Querschnitt besitzenden Grundkörper, weisen aber überraschenderweise ein vergleichbares oder niedrigeres Gewicht und vergleichbare Festigkeiten, Steifigkeiten und Energieaufnahmen auf.

### Bezugszeichenliste

- 1: flächig ausgebildeter, im wesentlichen ebener und einfach oder mehrfach gekröpfter Grundkörper
- 2, 2': Außenflächen des Grundkörpers (1)
- 3, 3': Verstärkungsrippen aus angespritztem Kunststoff
- 4: Durchbruch
- 5: Verbindung der Verstärkungsrippen (3) mit den Verstärkungsrippen (3') über einen Durchbruch (4)
- 6: Kreuzungspunkt der Verstärkungsrippen (3) oder (3')
- 7: Ummantelung der Randfläche (8)
- 8: Randfläche des Grundkörpers (1)
- 9: Aussparung
- 10: Ummantelung eines Teils oder der gesamten Außenflächen (2, 2')
- 11: Durchbruch zur Aufnahme einer Halterungsvorrichtung für das Bremspedal
- 12: Durchbruch zur Aufnahme einer Verbindungsvorrichtung mit einem Bremszylinder
- 13: Trittplatte

## Patentansprüche

1. Verbundbauteil aus einem flächig ausgebildeten Grundkörper (1) aus metallischen Werkstoffen, der auf beiden Außenflächen (2, 2') Verstärkungsrippen (3, 3') aufweist, welche aus angespritztem Kunststoff bestehen und mit dem Grundkörper (1) fest verbunden sind, und wobei der Grundkörper (1) im wesentlichen eben und einfach oder mehrfach gekröpft ist **dadurch gekennzeichnet dass** die Verbindung zwischen dem Grundkörper (1) und den Verstärkungsrippen (3, 3') über einen oder mehrere Durchbrüche (4) im Grundkörper (1) erfolgt, durch welche die Verstärkungsrippen (3) mit den Verstärkungsrippen (3') durch eine oder mehrere Verbindungen (5) aus dem zur Ausbildung der Verstärkungsrippen (3, 3') angespritzten Kunststoff verbunden sind.

2. Verbundbauteil nach Anspruch 1, **dadurch gekennzeichnet, daß** die Durchbrüche (4) von den Verbindungen (5) vollständig ausgefüllt werden.

3. Verbundbauteil nach Anspruch 1, **dadurch gekennzeichnet, daß** die Durchbrüche (4) von den Verbindungen (5) nur teilweise ausgefüllt werden.

4. Verbundbauteil nach einem der Ansprüche 1 bis 3, **dadurch gekennzeichnet, daß** die Verbindung (5) der Verstärkungsrippen (3) mit den Verstärkungsrippen (3') an den Kreuzungspunkten (6) der jeweiligen Verstärkungsrippen (3) oder (3') erfolgt.

5. Verbundbauteil nach einem der Ansprüche 1 bis 4, **dadurch gekennzeichnet, daß** die Verbindung (5) der Verstärkungsrippen (3) mit den Verstärkungsrippen (3') entlang der Verstärkungsrippen (3) und (3') erfolgt.

6. Verbundbauteil nach einem der Ansprüche 1 bis 5, **dadurch gekennzeichnet, daß** die Verbindung zwischen dem Grundkörper (1) und den Verstärkungsrippen (3, 3') durch eine Ummantelung (7) mindestens eines Teils oder der gesamten äußeren Randfläche (8) des Grundkörpers (1) mit dem zur Ausbildung der Verstärkungsrippen (3, 3') angespritzten Kunststoff erfolgt.

7. Verbundbauteil nach Anspruch 6, **dadurch gekennzeichnet, daß** der Grundkörper (1) an der mit einer Ummantelung (7) versehenen äußeren Randfläche (8) Aussparungen (9) aufweist, die einen Formschluß mit dem angespritzten Kunststoff bilden.

8. Verbundbauteil nach einem der Ansprüche 1 bis 7, **dadurch gekennzeichnet, daß** die Verbindung zwischen dem Grundkörper (1) und den Verstärkungsrippen (3, 3') durch eine Ummantelung (10) mindestens eines Teils oder der gesamten Außenflächen (2,2') des Grundkörpers (1) mit dem zur Ausbildung der Verstärkungsrippen (3, 3') angespritzten Kunststoff erfolgt.

9. Verbundbauteil nach Anspruch 8, **dadurch gekennzeichnet, daß** der Grundkörper (1) an den mit einer Ummantelung (10) versehenen Außenflächen (2, 2') diskrete Sicken, Ausbuchtungen oder ähnliche Verformungen aufweist, die einen Formschluß mit dem angespritzten Kunststoff bilden.

10. Verfahren zur Herstellung eines Verbundbauteils nach einem der Ansprüche 1 bis 9, **dadurch gekennzeichnet, daß** zuerst ein Grundkörper (1) aus einem flächigen ebenen Werkstoff ausgestanzt oder ausgeschnitten und gleichzeitig gekröpft wird, und anschließend das Anspritzen des Kunststoffs erfolgt, ohne daß der Grundkörper (1) einem weiteren Verformungsprozeß unterworfen werden muß.

11. Verwendung eines Verbundbauteils nach einem der Ansprüche 1 bis 9 als Hebel.

12. Verwendung eines Verbundbauteils nach einem der Ansprüche 1 bis 9 als Bremspedal für Kraftfahrzeuge.

13. Hebel, umfassend ein Verbundbauteil nach einem der Ansprüche 1 bis 9.

14. Bremspedal für Kraftfahrzeuge, umfassend ein Verbundbauteil nach einem der Ansprüche 1 bis 9.

15. Bremspedal für Kraftfahrzeuge nach Anspruch 14, **dadurch gekennzeichnet, daß** der Grundkörper (1) einen Durchbruch (11) zur Aufnahme einer Halterungsvorrichtung für das Bremspedal und gegebenenfalls einen Durchbruch (12) zur Aufnahme einer Verbindungsvorrichtung für einen Bremszylinder aufweist, und daß der zur Ausbildung der Verstärkungsrippen (3, 3') angespritzte Kunststoff eine Trittplatte (13) ausbildet.

16. Bremspedal für Kraftfahrzeuge nach den Ansprüchen 14 bis 15, **dadurch gekennzeichnet, daß** die dem Fuß zugewandte Oberfläche der Trittplatte (13) ganz oder teilweise von einem thermoplastischen Kunststoff ausgebildet wird, welcher sich von dem zur Ausbildung der Verstärkungsrippen (3, 3') angespritzten Kunststoff durch eine verbesserte Rutschfestigkeit unterscheidet.

## Claims

1. A composite component comprising a basic body (1) of a flat form composed of metal materials which has on both outer faces (2, 2') reinforcing ribs (3, 3') which consist of molded-on plastic and are firmly connected to the basic body (1), and the basic body (1) being substantially planar and being bent once or more than once, wherein the connection between the basic body (1) and the reinforcing ribs (3, 3') takes place via one or more apertures (4) in the basic body (1), through which the reinforcing ribs (3) are connected to the reinforcing ribs (3') by one or more connections (5) comprising the plastic molded on to form the reinforcing ribs (3, 3').

2. The composite component according to claim 1, wherein the apertures (4) are completely filled by the connections (5).

3. The composite component according to claim 1, wherein the apertures (4) are only partially filled by the connections (5).

4. The composite component according to one of claims 1 to 3, wherein the connection (5) of the reinforcing ribs (3) to the reinforcing ribs (3') takes place at the crossing points (6) of the respective reinforcing ribs (3) or (3').

5. The composite component according to one of claims 1 to 4, wherein the connection (5) of the reinforcing ribs (3) to the reinforcing ribs (3') takes place along the reinforcing ribs (3) and (3').

6. The composite component according to one of claims 1 to 5, wherein the connection between the basic body (1) and the reinforcing ribs (3, 3') takes place by a sheathing (7) of at least part of or the entire outer edge face (8) of the basic body (1) with the plastic molded on to form the reinforcing ribs (3, 3').

7. The composite component according to claim 6, wherein the basic body (1) has on the outer edge face (8), provided with a sheathing (7), clearances (9) which form a form fit with the molded-on plastic.

8. The composite component according to one of claims 1 to 7, wherein the connection between the basic body (1) and the reinforcing ribs (3, 3') takes place by a sheathing (10) of at least part of or the entire outer faces (2, 2') of the basic body (1) with the plastic molded on to form the reinforcing ribs (3, 3').

9. The composite component according to claim 8, wherein the basic body (1) has on the outer faces (2, 2') provided with a sheathing (10) discrete beads, bulges or similar formations which form a form fit with the molded-on plastic.

10. A method of producing a composite component according to one of claims 1 to 9, wherein, firstly, a basic body (1) is punched out or cut out from a sheet-like planar material and at the same time is bent and, subsequently, the molding-on of the plastic takes place, without the basic body (1) having to be subjected to a further deforming process.

11. The use of a composite component according to one of claims 1 to 9 as a lever.

12. The use of a composite component according to one of claims 1 to 9 as a brake pedal for motor vehicles.

13. A lever, comprising a composite component according to one of claims 1 to 9.

14. A brake pedal for motor vehicles, comprising a composite component according to one of claims 1 to 9.

15. The brake pedal for motor vehicles according to claim 14, wherein the basic body (1) has an aperture (11) for receiving a holding device for the brake pedal and, if appropriate, an aperture (12) for receiving a connecting device for a brake cylinder, and wherein the plastic molded on to form the reinforcing ribs (3, 3') forms a step plate (13).

16. The brake pedal for motor vehicles according to claims 14 and 15, wherein the surface of the step plate (13) facing the foot is formed entirely or partly from a thermoplastic material which differs from the plastic molded on to form the reinforcing ribs (3, 3') by improved slipping resistance.

## Revendications

1. Pièce composite constituée d'un corps de base (1) plan en matériaux métalliques, qui présente sur ses deux surfaces extérieures (2, 2') des nervures de renforcement (3, 3'), lesquelles sont constituées de plastique injecté et sont liées de manière fixe au corps de base (1), et où le corps de base (1) est substantiellement plan et coudé une ou plusieurs fois, **caractérisée en ce que** la liaison entre le corps de base (1) et les nervures de renforcement (3, 3') est assurée par un ou plusieurs passages (4) dans le corps de base (1), via lesquels les nervures de renforcement (3) sont liées aux nervures de renforcement (3') par une ou plusieurs liaisons (5) constituées du plastique injecté pour constituer les nervures de renforcement (3, 3').

2. Pièce composite selon la revendication 1, **caractérisée en ce que** les passages (4) sont totalement remplis par les liaisons (5).

3. Pièce composite selon la revendication 1, **caractérisée en ce que** les passages (4) ne sont que partiellement remplis par les liaisons (5).

4. Pièce composite selon l'une quelconque des revendications 1 à 3, **caractérisée en ce que** la liaison (5) des nervures de renforcement (3) avec les nervures de renforcement (3') se fait aux points de croisement (6) des nervures de renforcement (3) ou (3') respectives.

5. Pièce composite selon l'une quelconque des revendications 1 à 4, **caractérisée en ce que** la liaison (5) des nervures de renforcement (3) avec les nervures de renforcement (3') se fait le long des nervures de renforcement (3) et (3').

6. Pièce composite selon l'une quelconque des revendications 1 à 5, **caractérisée en ce que** la liaison entre le corps de base (1) et les nervures de renforcement (3, 3') se fait via une enveloppe (7) d'au moins une partie ou de la totalité de la surface extérieure du bord (8) du corps de base (1) avec le plastique injecté pour former les nervures de renforcement (3, 3').

7. Pièce composite selon la revendication 6, **caractérisée en ce que** le corps de base (1) présente, sur la surface extérieure de bord (8) munie d'une enveloppe (7), des découpes (9) qui forment une conformité géométrique avec le plastique injecté.

8. Pièce composite selon l'une quelconque des revendications 1 à 7, **caractérisée en ce que** la liaison entre le corps de base (1) et les nervures de renforcement (3, 3') est réalisée par une enveloppe (10) d'au moins une partie ou de la totalité des surfaces extérieures (2, 2') du corps de base (1) avec le plastique injecté pour former les nervures de renforcement (3, 3').

9. Pièce composite selon la revendication 8, **caractérisée en ce que** le corps de base (1) présente sur les surfaces extérieures (2, 2') munies d'une enveloppe (10) des moulures, des courbures ou des formes similaires discrètes qui forment une conformité géométrique avec le plastique injecté.

10. Procédé de fabrication d'une pièce composite selon l'une quelconque des revendications 1 à 9, **caractérisé en ce qu'**un corps de base (1) est d'abord estampé ou découpé dans un matériau plat et simultanément coudé, et que l'on procède ensuite à l'injection du plastique, sans que le corps de base (1) ne doive être soumis à un autre processus de formage.

11. Utilisation d'une pièce composite selon l'une quelconque des revendications 1 à 9 en tant que levier.

12. Utilisation d'une pièce composite selon l'une quelconque des revendications 1 à 9 en tant que pédale de frein pour véhicules automobiles.

13. Levier, comprenant une pièce composite selon l'une quelconque des revendications 1 à 9.

14. Pédale de frein pour véhicules automobiles, comprenant une pièce composite selon l'une quelconque des revendications 1 à 9.

15. Pédale de frein pour véhicules automobiles, selon la revendication 14, **caractérisée en ce que** le corps de base (1) présente un passage (11) pour la réception d'un dispositif de fixation pour la pédale de frein et le cas échéant un passage (12) pour la réception d'un dispositif de liaison pour un cylindre de frein, et **en ce que** le plastique injecté pour former les nervures de renforcement (3, 3') forme une pédale (13).

16. Pédale de frein pour véhicules automobiles selon les revendications 14 à 15, **caractérisée en ce que** la surface de la pédale (13) du côté du pied est formée en tout ou en partie d'un plastique thermoplastique, qui se distingue du plastique injecté pour former les nervures de renforcement (3, 3') par une meilleure propriété antidérapante.
